# FASCICULE DE BREVET EUROPEEN

(11) **EP 2 760 703 B1**
(45) Date de publication et mention de la délivrance du brevet: **29.07.2015**
(21) Numéro de dépôt: 12775760.7
(22) Date de dépôt: 24.09.2012
(51) Int. Cl.: B60R 9/058, B60R 9/04, B60R 9/052

(54) **DISPOSITIF DE FIXATION D'UNE BARRE DE TOIT D'UN VEHICULE AUTOMOBILE ET AGENCEMENT DE BARRES DE TOIT ASSEMBLEES VIA UN TEL DISPOSITIF SUIVANT PLUSIEURS CONFIGURATIONS**
VORRICHTUNG ZUR BEFESTIGUNG EINES KRAFTFAHRZEUGDACHBALKENS UND ANORDNUNG FÜR IN VERSCHIEDENEN KONFIGURATIONEN MONTIERTE DACHBALKEN MIT EINER SOLCHEN VORRICHTUNG
DEVICE FOR ATTACHING A MOTOR VEHICLE ROOF BAR AND ARRANGEMENT OF ROOF BARS WHICH HAVE BEEN ASSEMBLED IN VARIOUS CONFIGURATIONS USING SUCH A DEVICE

(30) Priorité: 27.09.2011 FR 1158588
(43) Date de publication de la demande: 06.08.2014
(73) Titulaire: Renault S.A.S., 92100 Boulogne-Billancourt (FR)
(72) Inventeur: MANCOIS, Laurent, 78370 Plaisir (FR)
(86) Numéro de dépôt international: PCT/FR2012/052122
(87) Numéro de publication internationale: WO 2013/045798

(56) Documents cités:
- WO-A1-93/20601
- DE-B3- 10 313 170
- US-A- 1 719 891
- US-A- 5 282 562

## Description

La présente invention concerne un dispositif de fixation d'une barre de toit d'un véhicule automobile ainsi qu'un agencement de barres de toit fixées par l'intermédiaire d'un tel dispositif.

On connaît de nombreux dispositifs de fixation de barres de toit de véhicule automobiles, comme par exemple celui décrit dans le document US S 282 562 A. Certains dispositifs sont non démontables. D'autres requièrent un outillage spécifique demandant en outre des opérations de montage / démontage délicates et fastidieuses. Ces dispositifs n'empêchent pour autant pas le vol des barres de toit. Des dispositifs se sont également développés récemment permettant une double disposition suivant une configuration longitudinale, parallèle à la direction longitudinale du véhicule, ou suivant une configuration transversale à la direction longitudinale. Toutefois on retrouve sur ces dispositifs les mêmes inconvénients que ceux déjà cités.

A cet effet, l'invention a pour objet un dispositif de fixation d'une barre de toit d'un véhicule automobile sur deux embases, caractérisé en ce que chaque extrémité de barre a, dans une section transversale à la direction longitudinale de la barre, la forme générale d'un C définissant un logement dans lequel est reçu un organe de verrouillage correspondant ayant une tête située dans le logement et un pied d'ancrage prolongeant la tête à l'extérieur de la barre suivant une direction perpendiculaire à la direction longitudinale de la barre en traversant une rainure conformée dans une paroi longitudinale inférieure de la barre correspondant à l'ouverture du C, l'organe de verrouillage comprenant un bouton poussoir déplaçable en translation entre d'une part une position de verrouillage commandant le déploiement d'un système à loquet porté par le pied d'ancrage, de manière à coopérer en prise avec des conformations d'ancrage prévues dans un passage d'une embase correspondante dans lequel est emboité l'organe de verrouillage, et d'autre part une position de déverrouillage commandant la rétractation du système à loquet, de manière à libérer la prise avec les conformations d'ancrage, le bouton poussoir en position de verrouillage étant éloigné du pied d'ancrage de façon à pénétrer dans un orifice de forme conjuguée formé dans une paroi longitudinale supérieure de la barre, tandis que le bouton poussoir en position de déverrouillage est rapproché du pied d'ancrage de façon à échapper à l'orifice et autoriser le coulissement longitudinal de l'organe de verrouillage par rapport à la barre, en particulier pour un changement de position ou une extraction de l'organe de verrouillage.

Ainsi la barre est fixée sans outillage spécifique. Le dispositif de fixation permet un montage et un démontage aisés, intuitif et très rapides. Il est compatible avec plusieurs configurations de positionnement des barres de toit sur le véhicule, classiquement sur le toit du véhicule, ou même dans des variantes à l'intérieur du véhicule par l'intermédiaire de dispositifs de fixation du même type et donc parfaitement compatibles.

Selon d'autres caractéristiques avantageuses de l'invention, l'organe de verrouillage comprend un moyen de rappel repoussant le bouton poussoir vers la position de verrouillage.

Selon encore d'autres caractéristiques avantageuses de l'invention, l'organe de verrouillage comprend un verrou, notamment à serrure, apte à sélectivement interdire ou autoriser le déplacement du bouton poussoir par rapport à la tête.

Selon encore d'autres caractéristiques avantageuses de l'invention, le système à loquet est constitué de deux loquets ayant chacun la forme générale d'un L, disposés symétriquement par rapport à un axe longitudinal du bouton poussoir, chaque loquet étant monté à rotation autour d'un axe de pivotement perpendiculaire à l'axe longitudinal du bouton poussoir et décalé par rapport à celui-ci, une branche du L étant reliée au bouton poussoir par un système à pion coulissant dans une lumière, tandis que l'autre branche du L forme une cale apte à pénétrer dans une conformation d'ancrage correspondante ayant une forme creuse conjuguée, ménagée dans le passage de l'embase, de façon à assurer un ancrage entre l'organe de verrouillage et l'embase.

L'invention a également pour objet un agencement de barres de toit d'un véhicule automobile caractérisé en ce qu'il comprend au moins deux barres de toit aptes à être fixées sur deux embases montées sur des bords latéraux du toit du véhicule, par l'intermédiaire d'un dispositif de fixation ayant tout ou partie des caractéristiques ci-dessus, les barres et embases étant conformées pour être assemblées sélectivement suivant une configuration longitudinale, parallèle à la direction longitudinale du véhicule, ou suivant une configuration transversale à la direction longitudinale du véhicule.

Selon d'autres caractéristiques avantageuses de l'agencement selon l'invention, chaque barre comporte à ses extrémités deux orifices extérieurs dans lesquels pénètrent deux boutons poussoirs correspondants en position de verrouillage lorsque les barres sont assemblées en configuration longitudinale, ainsi que deux orifices intérieurs dans lesquels pénètrent deux boutons poussoirs correspondants en position de verrouillage lorsque les barres sont assemblées en configuration transversale.

Selon encore d'autres caractéristiques avantageuses de l'agencement selon l'invention, au moins trois embases sont montées sur chaque bord latéral du toit du véhicule, de sorte que deux barres peuvent être assemblées avec les embases suivant au moins trois configurations transversales possibles.

Selon encore d'autres caractéristiques avantageuses de l'agencement selon l'invention, chaque barre a la forme générale d'un profilé.

L'invention a encore pour objet un véhicule automobile comprenant un agencement de barres de toit ayant tout ou partie des caractéristiques ci-dessus.

L'invention a encore pour objet un véhicule automobile comprenant des embases pour un agencement de barres de toit ayant tout ou partie des caractéristiques ci-dessus, considérant en outre qu'au moins quatre embases sont montées sur la structure à l'intérieur du véhicule, pour être assemblées avec au moins deux barres par l'intermédiaire d'un dispositif de fixation ayant les caractéristiques indiquées ci-dessus.

L'invention sera mieux comprise à la lecture de la description suivante d'un exemple non limitatif de l'invention, et à la lumière des dessins annexés sur lesquels :
- la figure 1 représente une vue en perspective d'un dispositif de fixation d'une barre de toit selon l'invention, à une extrémité de la barre de toit,
- la figure 2 représente une vue éclatée du dispositif de fixation de la figure 1,
- la figure 3 représente une extrémité de barre de toit sur laquelle est monté un organe de verrouillage d'un dispositif de fixation selon la figure 1,
- les figures 4 et 5 représentent un dispositif de fixation d'une barre de toit de la figure 1, respectivement en position de verrouillage et en position de déverrouillage, la vue étant en section transversale à la direction longitudinale de la barre, au droit d'une embase et d'un organe de verrouillage correspondant,
- la figure 6 représente un agencement de barres de toit selon l'invention, dans lequel les barres sont en configuration longitudinale,
- la figure 7 représente un agencement de barres de toit selon l'invention, dans lequel les barres sont en configuration transversale à l'extrême arrière,
- la figure 8 représente un agencement de barres de toit selon l'invention, dans lequel les barres sont dans une autre configuration transversale, à l'extrême avant et arrière, et
- les figures 9 et 10 représentent des vues en perspective de l'intérieur du véhicule dans lequel sont montées des barres de toit via un dispositif de fixation selon l'invention.

Dans le texte, on évoque la direction longitudinale X du véhicule comme étant la direction classique avant-arrière du véhicule. La direction Y est une direction transversale, et plus précisément perpendiculaire à cette direction longitudinale X. La direction Z est une direction verticale, perpendiculaire aux directions X et Y.

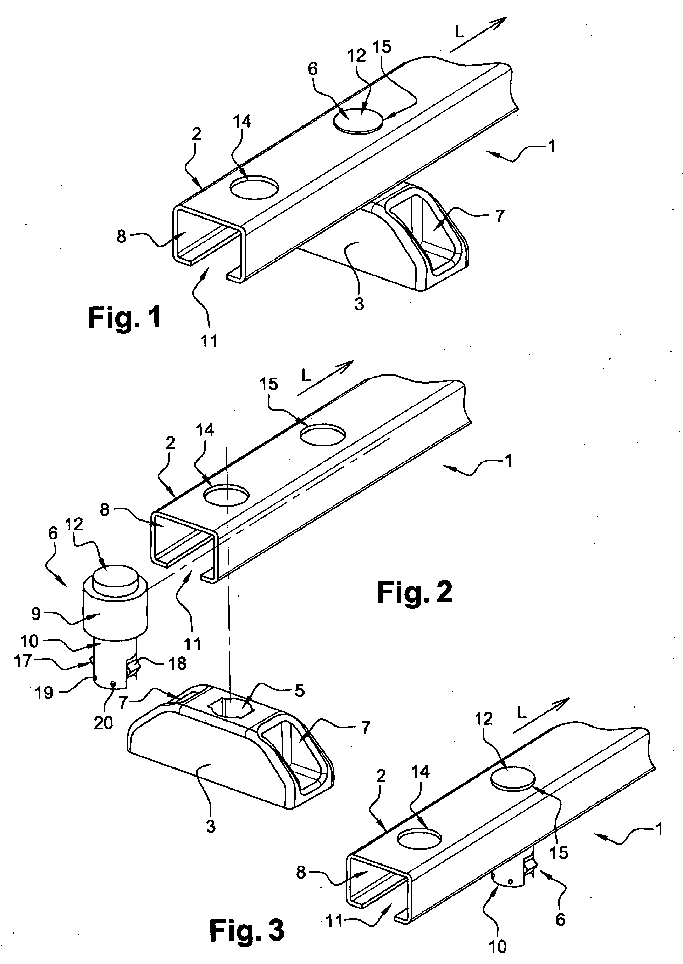

On a représenté aux figures 1 et 2 une extrémité 2 d'une barre 1 de toit d'un véhicule automobile assemblée sur une embase 3 correspondante solidaire du toit du véhicule. Dans l'idée de l'invention, les deux extrémités sont assemblées et fixées de la même manière sur des embases correspondantes. Une seule extrémité est représentée aux figures 1 à 3, étant entendu que la description vaut également pour l'autre extrémité.

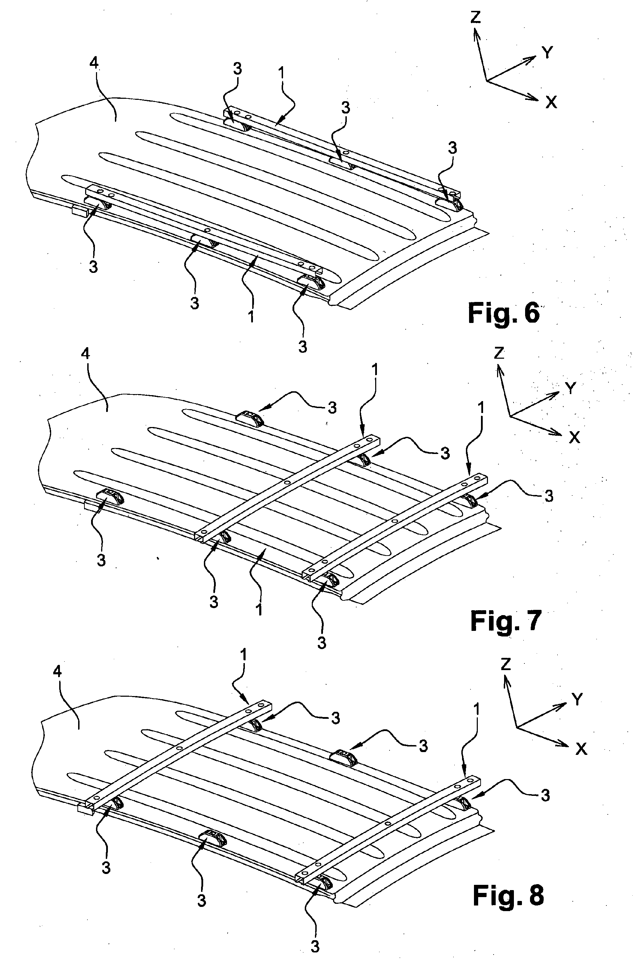

L'embase 3 est fixée sur un bord latéral du toit 4 du véhicule (visible aux figures 6 à 8). Dans l'exemple illustré, l'embase 3 a une forme générale allongée qui est orientée parallèlement à la direction longitudinale X du véhicule. L'embase 3 comporte un passage central 5 pour recevoir un organe de verrouillage 6 décrit ci-après. L'embase 3 est fixée à la structure du toit par des moyens de fixations classiques, par exemple des vis (non représentées) traversant une paroi de l'embase 3 en prenant appui sur celle-ci, et pénétrant dans des orifices filetés ou écrous solidaires de la structure du toit. Les têtes des vis peuvent être dissimulées dans des renfoncements 7 ménagés dans le corps de l'embase 3. Deux vis sont typiquement prévues, de façon symétrique, de part et d'autre du passage 5. L'embase peut être fixée à la structure du toit par d'autres moyens équivalents sans sortir du cadre de l'invention.

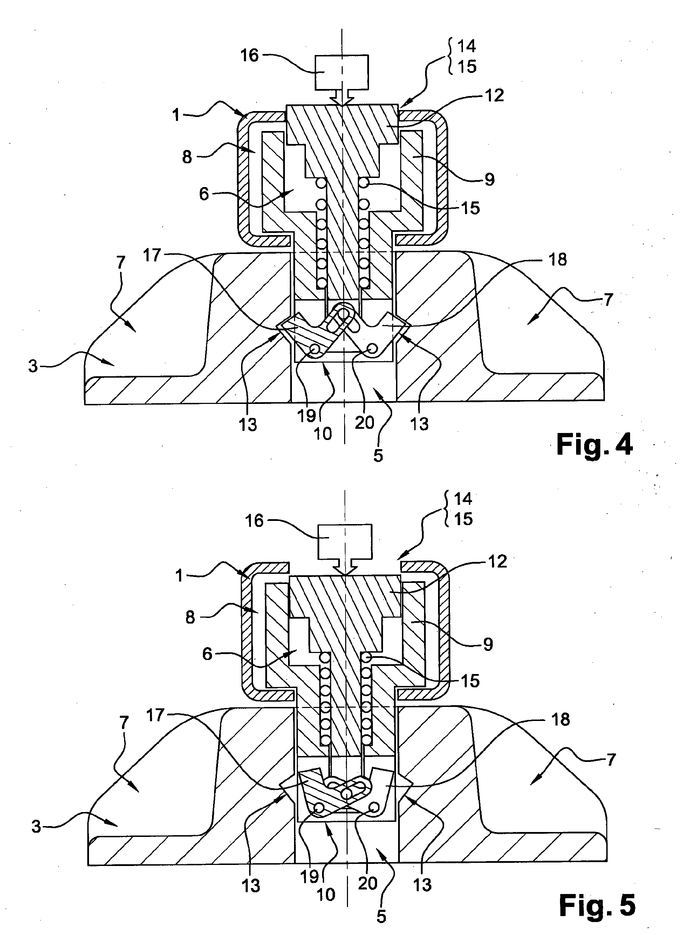

La barre 1 illustrée constitue une structure métallique qui a typiquement la forme générale d'un profilé, c'est-à-dire ayant une section sensiblement identique sur toute sa longueur. L'extrémité de la barre 1 a une section transversale à la direction longitudinale L de la barre 1 qui a la forme générale d'un C dont les contours s'inscrivent sensiblement dans un rectangle. Ce C définit un logement 8 dans lequel est reçu un organe de verrouillage 6 correspondant. L'organe de verrouillage a une tête 9 conformée pour pénétrer dans le logement 8, ainsi qu'un pied d'ancrage 10 prolongeant la tête 9 à l'extérieur de la barre 1 suivant une direction perpendiculaire à la direction longitudinale L de la barre 1. L'organe de verrouillage 6 traverse pour ce faire une rainure 11 conformée dans une paroi longitudinale inférieure de la barre 1 correspondant à l'ouverture du C. La paroi longitudinale inférieure a une forme sensiblement plane apte à prendre appui sur une face supérieure sensiblement plane de chaque embase 3. L'organe de verrouillage 6 a une forme générale cylindrique définie autour d'un axe de révolution. La tête 9 et le pied 10 ont tous deux une forme générale cylindrique, la tête 9 ayant un plus grand diamètre que le pied 10. De cette façon, la jonction entre la tête 9 et le pied 10 forme un épaulement apte à prendre appui sur les bords intérieurs de la rainure 11. Le pied 10 a un diamètre ajusté au passage 5, de sorte que le pied peut être introduit ou emboité dans le passage 5 avec un positionnement relativement précis. L'organe de verrouillage 6 comprend un bouton poussoir 12 déplaçable en translation (suivant l'axe de révolution précité) entre d'une part une position de verrouillage (illustrée aux figures 1, 3 et 4) commandant le déploiement d'un système à loquet 17, 18 décrit ci-après qui est porté par le pied d'ancrage 10, de manière à coopérer en prise avec des conformations d'ancrage 13 prévues dans le passage 5 de l'embase 3, et d'autre part une position de déverrouillage (illustrée à la figure 5) commandant la rétractation du système à loquet 17, 18, de manière à libérer la prise avec les conformations d'ancrage 13. Le déploiement du système à loquet assure le maintien de l'organe de fixation dans le passage 5 et donc la prise qui est établie entre l'organe de fixation 6 et l'embase 3.

Le bouton poussoir 12 en position de verrouillage (figures 4) est éloigné du pied d'ancrage 10 de façon à pénétrer dans un orifice 14, 15 de forme conjuguée formé dans une paroi longitudinale supérieure de la barre 1, située à l'opposé de la paroi longitudinale inférieure. Le bouton poussoir 12 en position de déverrouillage (figure 5) est rapproché du pied d'ancrage 10 de façon à échapper à l'orifice 14, 15 et autoriser le coulissement longitudinal suivant L de l'organe de verrouillage 6 par rapport à la barre 1. Le bouton poussoir 12 pénétrant dans l'orifice 14, 15 de la barre 1 implique un blocage relatif de l'organe de fixation 6 par rapport à la barre 1 suivant la direction longitudinale L de la barre 1. A l'inverse, lorsque le bouton poussoir 12 ressort de l'orifice 14, 15, le coulissement longitudinal de l'organe de verrouillage 6 suivant la direction L est rendu possible, par exemple pour changer la position de l'organe de verrouillage 6 pour coopérer avec un autre orifice 14, 15 prévu sur la paroi longitudinale supérieure de la barre 1. Ce coulissement permet également d'extraire l'organe de verrouillage 6 du logement 8 en vue de démonter complètement le dispositif.

L'organe de verrouillage 6 comprend un moyen de rappel 15 repoussant le bouton poussoir 12 vers la position de verrouillage, en l'absence d'une pression exercée manuellement dans le sens inverse. Ce moyen de rappel est typiquement un ressort de compression hélicoïdal prenant appui entre un épaulement du bouton poussoir 12 et une face interne du corps de l'organe de verrouillage 6, qui est fixe par rapport à la tête 9.

L'organe de verrouillage 6 comprend un verrou apte à sélectivement interdire ou autoriser le déplacement du bouton poussoir 12 par rapport à la tête 9. Ce verrou est typiquement un système de type serrure-clé. Une clé 16 représentée schématiquement aux figures 4 et 5 est introduite dans une serrure accessible sur la face extérieure du bouton poussoir 12 débouchant par l'orifice 14, 15. Ainsi le bouton poussoir 12 peut être bloqué en position de verrouillage (figure 4), ou en position de déverrouillage (figure 5).

Comme on le voit aux figures 4 et 5, le système à loquet est constitué de deux loquets 17, 18 ayant chacun la forme générale d'un L disposés symétriquement par rapport à un axe longitudinal du bouton poussoir 6, correspondant à son axe de révolution. Chaque loquet 17, 18 est monté à rotation autour d'un axe de pivotement 19, 20 perpendiculaire à l'axe longitudinal du bouton poussoir 6. Chaque axe de pivotement 19, 20 est décalé par rapport à l'axe longitudinal du bouton poussoir 6. Une branche du L est reliée au bouton poussoir 12 par un système à pion coulissant dans une lumière. Dans l'exemple illustré, le pion est solidaire du bouton poussoir tandis que la lumière est formé sur la branche du L. Un même pion se déplace dans deux lumières respectives appartenant aux branches du L de chaque loquet. On note que l'axe du pion est aligné avec l'axe longitudinal du bouton poussoir. L'autre branche du L forme une cale apte à pénétrer dans une conformation d'ancrage 13 associée ayant une forme creuse conjuguée ménagée dans le passage 5 de l'embase 3, de façon à assurer un ancrage entre l'organe de verrouillage 6 et l'embase 3.

En référence à la figure 2, le montage du dispositif de fixation s'opère de la façon suivante : l'organe de verrouillage 6 est introduit dans le logement 8 à l'extrémité de la barre 1, l'organe de verrouillage 6 étant orienté perpendiculairement à la direction longitudinale L de la barre 1. L'assemblage ainsi réalisé entre la barre et l'organe de verrouillage (figure 3) est ensuite monté et fixé sur l'embase 3 correspondante en introduisant le pied 10 de l'organe de verrouillage 6 dans le passage 5 de l'embase 3.

La fixation entre l'extrémité de la barre 1 portant l'organe de verrouillage 6 et l'embase 3 est expliqué en référence aux figures 4 et 5. Partant de la position de verrouillage présenté à la figure 4, on actionne le verrou, en l'occurrence un système à clé 16 permettant d'ouvrir la serrure libérant le déplacement du bouton poussoir 12 par rapport à la tête 9. On appuie sur le bouton poussoir 12. Celui-ci coulisse dans un alésage conformé dans la tête 9. Cette action comprime le ressort 15 et fait pivoter les loquets 17, 18 autour des axes 19, 20, de façon à les rétracter et donc à les extraire des conformations d'ancrage 13 du passage 5. On soulève ensuite la barre 1 avec son organe de verrouillage 6 de façon à les désolidariser de l'embase 3.

Inversement, le montage et la fixation s'effectuent en présentant la barre 1 et son organe de verrouillage 6 préalablement introduit au dessus de l'embase 3. L'organe de verrouillage 6 est emboité par son pied 10 dans le passage 5 de l'embase 3. On appuie ensuite fermement sur l'extrémité de la barre 1 jusqu'à ce que la barre 1 coopère en appui sur l'embase 3. Lorsque les loquets 17, 18 se trouvent en face des conformations d'ancrage 13, ces loquets pénètrent automatiquement dans les conformations d'ancrage 13 sous l'effet du ressort 15 qui tend à repousser le bouton poussoir 12 vers sa position de verrouillage, en entraînant simultanément le pivotement des loquets 17, 18 vers leur position déployée. On se retrouve alors dans la position illustré à la figure 4. La clé 16 est tournée dans la serrure pour bloquer le déplacement du bouton poussoir, ce qui rend l'ensemble inviolable.

Selon l'invention, on peut prévoir des dispositifs de fixation permettant d'agencer des barres de toit suivant plusieurs configurations.

Selon un agencement particulièrement intéressant de l'invention, on prévoit deux barres de toit aptes à être fixées sur deux embases correspondantes montées sur des bords latéraux du toit du véhicule, par l'intermédiaire d'un dispositif de fixation tel que décrit précédemment. Les barres 1 et embases 3 sont conformées pour être assemblées sélectivement suivant une configuration longitudinale, parallèle à la direction longitudinale X du véhicule, comme illustré à la figure 6, ou suivant une configuration transversale à la direction longitudinale X du véhicule, comme illustré aux figures 7 et 8. On peut pour cela utiliser quatre mêmes embases disposées aux quatre angles d'un rectangle (figure 6 et figure 8), étant entendu que l'écartement (entraxe) entre les embases 3 peut être identiques entre une disposition longitudinale et une position transversale (non illustré) ou au contraire que l'écartement peut être spécifique à chaque configuration. Un intérêt particulier de l'invention réside dans le fait que le positionnement des organes de verrouillage 6 le long d'une même barre 1 dépend du nombre et de la position d'orifice 14, 15 prévus sur une face longitudinale supérieure de la barre 1.

A cet effet, on a prévu dans l'exemple illustré que chaque barre 1 comporte à ses extrémités deux orifices extérieurs 14 dans lesquels pénètrent deux boutons poussoirs 12 correspondants de deux organes de fixation 6 respectifs en position de verrouillage lorsque les barres 1 sont assemblées en configuration longitudinale (figure 6). On a également prévu que chaque barre 1 comporte deux orifices intérieurs 15 dans lesquels pénètrent deux boutons poussoirs correspondants de deux organes de fixation 6 respectifs en position de verrouillage lorsque les barres 1 sont assemblées en configuration transversale (figures 7, 8). Ceci est pertinent lorsque la largeur du véhicule (suivant la direction transversale Y) n'est pas suffisamment importante pour assurer une fixation des barres au niveau des mêmes orifices que ceux utilisés pour une fixation des barres agencées longitudinalement. Seuls le nombre d'embases, leur disposition et les perçages prévus sur les barres sont à prévoir pour offrir différentes configurations d'utilisation.

Les figures 7 montrent que l'on peut prévoir trois embases 3 sur les bords latéraux du toit 4 du véhicule, de manière à autoriser plusieurs configurations transversales des barres 1. Par exemple la figure 8 représente une configuration transversale dans laquelle une barre est située à l'extrême avant et une seconde barre est située à l'extrême arrière. La figure 7 représente une autre configuration transversale dans laquelle une barre est située dans une position médiane, entre l'extrême avant et l'extrême arrière, tandis qu'une seconde barre est située à l'extrême arrière. Une troisième configuration transversale possible (non représentée) consiste à disposer une barre à l'extrême avant tandis qu'une seconde barre est située dans une position médiane.

On note que dans la configuration longitudinale (figure 6), il est possible de fixer chaque barre 1 en son milieu sur une embase médiane, via un organe de fixation correspondant introduit dans la barre jusqu'à une position centrale. La paroi longitudinale supérieure de la barre comporte un orifice à cet effet. Cette fixation centrale est facultative mais peut s'avérer utile pour rigidifier l'ensemble.

En variante à la multiplication des orifices 14, 15 prévus sur la barre, on peut envisager que la barre possède deux parties coulissantes l'une par rapport à l'autre de façon télescopique, de façon à compenser les différences d'écartement ou entraxes entre les embases 3, en passant d'une configuration à une autre.

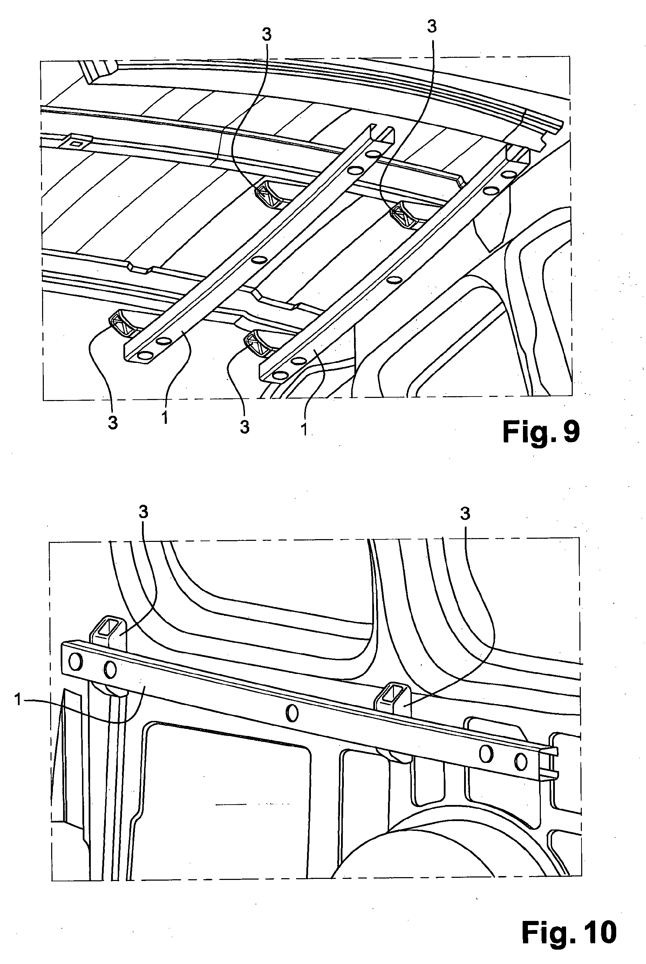

Selon un aspect intéressant de l'invention, des embases 3 peuvent être prévues à l'intérieur du véhicule. Ces embases sont les mêmes que celles des dispositifs de fixation prévus pour un montage extérieur des barres sur le toit du véhicule. Une parfaite compatibilité est assurée entre ces moyens de fixation, de manière à multiplier les possibilités de configuration pour une diversité de pièce et des coûts extrêmement réduits. Ces embases 3 sont disposées sur la face intérieure du toit du véhicule. Elles sont disposées pour autoriser un agencement des barres 1 selon une configuration longitudinale à l'intérieur du véhicule, comme le montre la figure 9. On note que les embases doivent coïncider avec des orifices prévus sur les barres, la figure 9 illustrant une fixation adéquate à une extrémité uniquement (orifice en regard d'un organe d'une embase).

On peut également envisager de disposer les barres à l'intérieur du véhicule selon une configuration transversale, lorsque l'espace intérieur du véhicule le permet, ou en prévoyant des barres télescopiques comme évoqué plus haut.

En référence à la figure 10, des embases peuvent également être montées à l'intérieur du véhicule sur des côtés de caisse, au niveau de parties structurelles relativement rigides. De telles barres disposées latéralement dans un volume de coffre permettent de supporter ou d'arrimer des équipements divers à l'intérieur du véhicule. Des barres sont de préférence prévues sur les deux côtés latéraux du véhicule.

Bien entendu, l'invention n'est pas limitée aux modes ou variantes de réalisation décrits précédemment et comprends tous les équivalents techniques de ces moyens.

## Revendications

1. Dispositif de fixation d'une barre (1) de toit (4) d'un véhicule automobile sur deux embases (3), **caractérisé en ce que** chaque extrémité (2) de barre (1) a, dans une section transversale à la direction longitudinale (L) de la barre, la forme générale d'un C définissant un logement (8) dans lequel est reçu un organe de verrouillage (6) correspondant ayant une tête (9) située dans le logement (8) et un pied d'ancrage (10) prolongeant la tête (9) à l'extérieur de la barre (1) suivant une direction perpendiculaire à la direction longitudinale (L) de la barre (1) en traversant une rainure (11) conformée dans une paroi longitudinale inférieure de la barre (1) correspondant à l'ouverture du C, l'organe de verrouillage (6) comprenant un bouton poussoir (12) déplaçable en translation entre d'une part une position de verrouillage commandant le déploiement d'un système à loquet (17, 18) porté par le pied d'ancrage (10), de manière à coopérer en prise avec des conformations d'ancrage (13) prévues dans un passage (5) d'une embase correspondante (3) dans lequel est emboité l'organe de verrouillage (6), et d'autre part une position de déverrouillage commandant la rétractation du système à loquet (17, 18), de manière à libérer la prise avec les conformations d'ancrage (13), le bouton poussoir (12) en position de verrouillage étant éloigné du pied d'ancrage (10) de façon à pénétrer dans un orifice (14, 15) de forme conjuguée formé dans une paroi longitudinale supérieure de la barre (1), tandis que le bouton poussoir (12) en position de déverrouillage est rapproché du pied d'ancrage (10) de façon à échapper à l'orifice (14, 15) et autoriser le coulissement longitudinal de l'organe de verrouillage (6) par rapport à la barre (1), en particulier pour un changement de position ou une extraction de l'organe de verrouillage.

2. Dispositif de fixation d'une barre (1) de toit (4) selon la revendication 1, **caractérisé en ce que** l'organe de verrouillage (6) comprend un moyen de rappel (15) repoussant le bouton poussoir (12) vers la position de verrouillage.

3. Dispositif de fixation d'une barre (1) de toit (4) selon la revendication 1 ou 2, **caractérisé en ce que** l'organe de verrouillage (6) comprend un verrou, notamment à serrure, apte à sélectivement interdire ou autoriser le déplacement du bouton poussoir (12) par rapport à la tête (9).

4. Dispositif de fixation d'une barre (1) de toit (4) selon l'une quelconque des revendications 1 à 3, **caractérisé en ce que** le système à loquet est constitué de deux loquets (17, 18) ayant chacun la forme générale d'un L, disposés symétriquement par rapport à un axe longitudinal du bouton poussoir (12), chaque loquet (17, 18) étant monté à rotation autour d'un axe de pivotement (19, 20) perpendiculaire à l'axe longitudinal du bouton poussoir et décalé par rapport à celui-ci, une branche du L étant reliée au bouton poussoir (12) par un système à pion coulissant dans une lumière, tandis que l'autre branche du L forme une cale apte à pénétrer dans une conformation d'ancrage (13) correspondante ayant une forme creuse conjuguée, ménagée dans le passage (5) de l'embase (3), de façon à assurer un ancrage entre l'organe de verrouillage (6) et l'embase (3).

5. Agencement de barres (1) de toit (4) d'un véhicule automobile **caractérisé en ce qu'**il comprend au moins deux barres (1) de toit, de section transversale en forme de C, aptes à être fixées sur deux embases (3) montées sur des bords latéraux du toit (4) du véhicule, par l'intermédiaire d'un dispositif de fixation suivant l'une quelconque des revendications 1 à 4, les barres (1) et embases (3) étant conformées pour être assemblées sélectivement suivant une configuration longitudinale, parallèle à la direction longitudinale (X) du véhicule, ou suivant une configuration transversale à la direction longitudinale (X) du véhicule.

6. Agencement de barres de toit (4) selon la revendication 5, **caractérisé en ce que** chaque barre (1) comporte à ses extrémités (2) deux orifices extérieurs (14) dans lesquels pénètrent deux boutons poussoirs (12) correspondants en position de verrouillage lorsque les barres (1) sont assemblées en configuration longitudinale, ainsi que deux orifices intérieurs (15) dans lesquels pénètrent deux boutons poussoirs (12) correspondants en position de verrouillage lorsque les barres (1) sont assemblées en configuration transversale.

7. Agencement de barres de toit (4) selon la revendication 5 ou 6, **caractérisé en ce qu'**au moins trois embases (3) sont montées sur chaque bord latéral du toit (4) du véhicule, de sorte que deux barres (1) peuvent être assemblées avec les embases (3) suivant au moins trois configurations transversales possibles.

8. Véhicule automobile **caractérisé en ce qu'**il comprend un agencement de barres (1) de toit (4) suivant l'une quelconque des revendications 5 à 7.

9. Véhicule automobile selon la revendication 8 **caractérisé en ce qu'**il comprend des embases (3) pour un agencement de barres (1) de toit (4) , ainsi qu'au moins quatre embases (3) montées sur la structure à l'intérieur du véhicule, pour être assemblées avec au moins deux barres (1) par l'intermédiaire d'un dispositif de fixation selon l'une quelconque des revendications 1 à 4.

## Patentansprüche

1. Vorrichtung zur Befestigung eines Trägers (1) eines Dachs (4) eines Kraftfahrzeugs auf zwei Sockeln (3), **dadurch gekennzeichnet, dass** jedes Ende (2) eines Trägers (1) in einem Querschnitt zur Längsrichtung (L) des Trägers die allgemeine Form eines C hat, das eine Aufnahme (8) definiert, in der ein entsprechendes Verriegelungsorgan (6) aufgenommen wird, das einen in der Aufnahme (8) befindlichen Kopf (9) und einen Verankerungsfuß (10) hat, der den Kopf (9) außerhalb des Trägers (1) in einer Richtung lotrecht zur Längsrichtung (L) des Trägers (1) verlängert, indem er eine Rille (11) durchquert, die in einer unteren Längswand des Trägers (1) entsprechend der Öffnung des C ausgebildet ist, wobei das Verriegelungsorgan (6) einen Druckknopf (12) enthält, der in Translationsrichtung zwischen einerseits einer Verriegelungsstellung, die das Ausfahren eines Systems mit Schnappriegel (17, 18) steuert, das vom Verankerungsfuß (10) getragen wird, um in Eingriff mit Verankerungsausbildungen (13) zusammenzuwirken, die in einem Durchgang (5) eines entsprechenden Sockels (3) vorgesehen sind, in den das Verriegelungsorgan (6) eingesteckt wird, und andererseits einer Entriegelungsstellung verschiebbar ist, die das Zurückziehen des Schnappriegelsystems (17, 18) steuert, um den Eingriff mit den Verankerungsausbildungen (13) freizugeben, wobei der Druckknopf (12) in der Verriegelungsstellung vom Verankerungsfuß (10) entfernt wird, um in eine Öffnung (14, 15) entsprechender Form einzudringen, die in einer oberen Längswand des Trägers (1) ausgebildet ist, während der Druckknopf (12) in der Entriegelungsstellung dem Verankerungsfuß (10) angenähert wird, um aus der Öffnung (14, 15) auszutreten und das Längsgleiten des Verriegelungsorgans (6) bezüglich des Trägers (1) zu erlauben, insbesondere für eine Stellungsänderung oder ein Herausziehen des Verriegelungsorgans.

2. Befestigungsvorrichtung eines Trägers (1) eines Dachs (4) nach Anspruch 1, **dadurch gekennzeichnet, dass** das Verriegelungsorgan (6) eine Rückstelleinrichtung (15) enthält, die den Druckknopf (12) in die Verriegelungsstellung zurückstößt.

3. Befestigungsvorrichtung eines Trägers (1) eines Dachs (4) nach Anspruch 1 oder 2, **dadurch gekennzeichnet, dass** das Verriegelungsorgan (6) einen Riegel, insbesondere mit Schloss, enthält, der die Verschiebung des Druckknopfs (12) bezüglich des Kopfs (9) selektiv verbieten oder erlauben kann.

4. Befestigungsvorrichtung eines Trägers (1) eines Dachs (4) nach einem der Ansprüche 1 bis 3, **dadurch gekennzeichnet, dass** das Schnappriegelsystem aus zwei Schnappriegeln (17, 18) besteht, die je die allgemeine Form eines L haben, symmetrisch bezüglich einer Längsachse des Druckknopfs (12) angeordnet sind, wobei jeder Schnappriegel (17, 18) um eine Schwenkachse (19, 20) lotrecht zur Längsachse des Druckknopfs und in Bezug auf diese versetzt drehbar montiert ist, wobei ein Schenkel des L über ein System mit einem in einem Loch gleitenden Zapfen mit dem Druckknopf (12) verbunden ist, während der andere Schenkel des L einen Keil formt, der in eine entsprechende Verankerungsausbildung (13) eindringen kann, die eine dementsprechend im Durchgang (5) des Sockels (3) ausgesparte vertiefte Form hat, um eine Verankerung zwischen dem Verriegelungsorgan (6) und dem Sockel (3) zu gewährleisten.

5. Anordnung von Trägern (1) eines Dachs (4) eines Kraftfahrzeugs, **dadurch gekennzeichnet, dass** sie mindestens zwei Dachträger (1) mit C-förmigem Querschnitt enthält, die mittels einer Befestigungsvorrichtung nach einem der Ansprüche 1 bis 4 auf zwei Sockeln (3) befestigt werden können, die auf Seitenränder des Dachs (4) des Fahrzeugs montiert sind, wobei die Träger (1) und die Sockel (3) ausgebildet sind, um gemäß einer Längskonfiguration parallel zur Längsrichtung (X) des Fahrzeugs oder gemäß einer Querkonfiguration zur Längsrichtung (X) des Fahrzeugs selektiv zusammengebaut werden zu können.

6. Anordnung von Dachträgern (4) nach Anspruch 5, **dadurch gekennzeichnet, dass** jeder Träger (1) an seinen Enden (2) zwei äußere Öffnungen (14), in die zwei entsprechende Druckknöpfe (12) in der Verriegelungsstellung eindringen, wenn die Träger (1) in Längskonfiguration zusammengebaut werden, sowie zwei innere Öffnung (15) aufweist, in die zwei entsprechende Druckknöpfe (12) in der Verriegelungsstellung eindringen, wenn die Träger (1) in Querkonfiguration zusammengebaut werden.

7. Anordnung von Dachträgern (4) nach Anspruch 5 oder 6, **dadurch gekennzeichnet, dass** mindestens drei Sockel (3) auf jeden Seitenrand des Dachs (4) des Fahrzeugs montiert sind, so dass zwei Träger (1) mit den Sockeln (3) gemäß mindestens drei möglichen Querkonfigurationen zusammengebaut werden können.

8. Kraftfahrzeug, **dadurch gekennzeichnet, dass** es eine Anordnung von Dachträgern (4) nach einem der Ansprüche 5 bis 7 enthält.

9. Kraftfahrzeug nach Anspruch 8, **dadurch gekennzeichnet, dass** es Sockel (3) für eine Anordnung von Trägern (1) eines Dachs (4) sowie mindestens vier Sockel (3) enthält, die auf die Struktur im Inneren des Fahrzeugs montiert sind, um mit mindestens zwei Trägern (1) mittels einer Befestigungsvorrichtung nach einem der Ansprüche 1 bis 4 zusammengebaut zu werden.

## Claims

1. Device for attaching a roof bar (4, 1) of a motor vehicle on two mountings (3), **characterized in that** each extremity (2) of the bar (1) is essentially C-shaped in a section transverse to the longitudinal direction (L) of the bar, defining a seat (8) for receiving a corresponding locking member (6) with a head (9) located in the seat (8) and an anchoring leg (10) extending the head (9) to the outside of the bar (1) in a direction perpendicular to the longitudinal direction (L) of the bar (1) by passing through a slot (11) formed in a lower longitudinal wall of the bar (1) corresponding to the opening of the C, the locking member (6) having a pushbutton (12) that can be moved in translation between firstly a locked position in which a catch system (17, 18) borne by the anchoring leg (10) is deployed such as to engage the anchoring shapes (13) formed in a passage (5) in a corresponding mounting (3) in which the locking member (6) is fitted, and secondly an unlocked position in which the catch system (17, 18) is retracted such as to disengage the anchoring shapes (13), the pushbutton (12) in locked position being removed from the anchoring leg (10) such as to penetrate a mating orifice (14, 15) formed in an upper longitudinal wall of the bar (1), while the pushbutton (12) in unlocked position is closer to the anchoring leg (10) such as to avoid the orifice (14, 15) and to enable the locking member (6) to slide longitudinally in relation to the bar (1), in particular to change position or to remove the locking member.

2. Device for attaching a roof bar (4, 1) according to Claim 1, **characterized in that** the locking member (6) includes return means (15) pushing the pushbutton (12) back towards the locked position.

3. Device for attaching a roof bar (4, 1) according to Claim 1 or 2, **characterized in that** the locking member (6) includes a bolt, in particular a lock bolt, that can selectively prevent or permit movement of the pushbutton (12) in relation to the head (9).

4. Device for attaching a roof bar (4, 1) according to any one of Claims 1 to 3, **characterized in that** the catch system includes two catches (17, 18) each being essentially L-shaped, arranged symmetrically in relation to a longitudinal axis of the pushbutton (12), each catch (17, 18) being mounted rotatably about a pivot axis (19, 20) perpendicular to the longitudinal axis of the pushbutton and offset in relation thereto, one branch of the L being linked to the pushbutton (12) by a system comprising a pin sliding in an aperture, while the other branch of the L forms a wedge that can penetrate a corresponding mating hollow anchoring shape (13) formed in the passage (5) of the mounting (3), such as to form an anchor between the locking member (6) and the mounting (3).

5. Arrangement of roof bars (4, 1) of a motor vehicle, **characterized in that** it includes at least two roof bars (1) that are C-shaped in transverse section and can be attached to two mountings (3) mounted on the side edges of the roof (4) of the vehicle, by means of an attachment device according to any one of Claims 1 to 4, the bars (1) and the mountings (3) being designed to be assembled selectively in a longitudinal layout parallel to the longitudinal direction (X) of the vehicle or in a layout transverse to the longitudinal direction (X) of the vehicle.

6. Roof (4) bar arrangement according to Claim 5, **characterized in that** each bar (1) has, at the extremities (2) thereof, two external orifices (14) into which penetrate two corresponding pushbuttons (12) in the locked position when the bars (1) are assembled in a longitudinal layout, and two internal orifices (15) into which penetrate two corresponding pushbuttons (12) in the locked position when the bars (1) are assembled in a transverse layout.

7. Roof (4) bar arrangement according to Claim 5 or 6, **characterized in that** at least three mountings (3) are assembled on each side edge of the roof (4) of the vehicle, such that two bars (1) can be assembled with the mountings (3) in at least three possible transverse layouts.

8. Motor vehicle **characterized in that** it includes an arrangement of roof bars (4, 1) according to any one of Claims 5 to 7.

9. Motor vehicle according to Claim 8 **characterized in that** it includes mountings (3) for a roof bar (4, 1) arrangement, as well as at least four mountings (3) assembled on the structure inside the vehicle, to be assembled with at least two bars (1) by means of an attachment device according to any one of Claims 1 to 4.
